Europäisches Patentamt

European Patent Office

Office européen des brevets

(11) Publication number: **0 175 149 B1**

## EUROPEAN PATENT SPECIFICATION

(45) Date of publication of patent specification: 05.06.91  (51) Int. Cl.⁵·  **H01M  2/02**

(21) Application number: 85110278.0

(22) Date of filing: 16.08.85

(54) Alkaline primary battery containing coated current collector.

(30) Priority: 21.08.84 US 642794

(43) Date of publication of application:
26.03.86 Bulletin  86/13

(45) Publication of the grant of the patent:
05.06.91 Bulletin  91/23

(84) Designated Contracting States:
BE CH DE FR GB IT LI NL SE

(56) References cited:
DE-A- 1 936 265
FR-A- 1 567 747

PATENTS ABSTRACTS OF JAPAN, vol. 7, no.
132 (E-180)[1277], 9th June 1983; & JP-A-58
48 361 (FUJI DENKI KAGAKU K.K.) 22-03-1983

PATENTS ABSTRACTS OF JAPAN, vol. 9, no.
99 (E-311)[1822], 27th April 1985; & JP-A-59
224 054 (HITACHI MAXELL K.K.) 15-12-1984

PATENTS ABSTRACTS OF JAPAN, vol. 5, no.
141 (E-73)[813], 5th September 1981; & JP-
A-56 78 062 (MATSUSHITA DENKI SANGYO
K.K.) 26-06-1981

(73) Proprietor: RAYOVAC Corporation
101 East Washington Avenue
Madison Wisconsin 53703(US)

(72) Inventor: Hafner, Steven J.
5016 Wetheredsville, Rd.
Baltimore Maryland 21207(US)
Inventor: Kulibert, Gregory Stephen
455 N. Westfield Street
Oshkosh Wisconsin 54901(US)

(74) Representative: Behrens, Dieter, Dr.-Ing. et al
Wuesthoff & Wuesthoff Patent- und Recht-
sanwälte Schweigerstrasse 2
W-8000 München 90(DE)

## Description

The invention relates to alkaline primary batteries and, in particular, to a means for improving the performance characteristics thereof.

Alkaline primary batteries and, in particular, alkaline manganese dioxide/zinc dry cells ($MnO_2$/Zn), have been a successful commercial development. When produced as a cylindrical cell, the battery has a $MnO_2$ cathode mix with carbon or graphite as an outer annulus, an amalgamated zinc powder anode and a container, which functions as a positive current collector. Usually, most of the electrolyte is disposed within the anode. Good electrical connection between the cathode mix and the positive current collector, which is usually made of steel, has always been desired in order to keep the internal resistance of the cell to a minimum.

One method of obtaining the desired electrical contact between the positive current collector and the cathode mix is to create high pressure at the interface between the two members. Hosfield, in U.S. Patent No. 3,156,749, obtains high pressure contact through forming a cylindrical battery cathode by impact molding it within the current collector. High pressure contact can also be achieved by inserting annular rings of cathode mix into the positive current collector, which has an inside diameter less than the outside diameter of the cathode rings.

Even with good electrical connection realized through high pressure contact, it has been long recognized that the resistance between the cathode and an untreated steel current collector causes a reduction in the performance of alkaline dry cell batteries. This resistance is known to increase during storage, especially during storage at high temperatures. Many solutions to this problem have been suggested. For example, Ruben, in U.S. patent No. 3,066,179, taught that by applying a thin coat of gold to a steel current collector resistivity would be markedly decreased. Similarly, in U.S. patent No. 3,485,675, Ruben suggested a surface carburized layer on the steel.

A further suggestion is that in Japanese patent publication No. 42-25145 which discloses that a continuous coating layer layered upon the positive current collector with a 45 to 75 weight % graphite laden synthetic resin would reduce the resistance between the cathode mix and the positive current collector.

Also, Japanese patent publication No. 58-48361-1983 discloses to increase the short circuit current of an alkaline primary dry cell over an extended period of time by improving the electric contact between a positive cathode mix and the inner wall of a positive can. The conductive coating consists of 30 to 50 weight % poly vinyl isobutyl ether, 5 to 15 weight % acetylene black and 40 to 60 weight % graphite. This coating is to be regarded as continuous even if applied thin.

While all of the aforementioned solutions have been attempted, nickel plating of the steel is the present commercial solution. While less expensive than gold plating or a surface carburized layer of steel, an even less expensive solution has been sought.

It is an object of the present invention to provide for the further reduction of the internal resistance between the cathode mix and the positive current collector of alkaline primary cells thereby increasing the performance of the same even more. Another object of the present invention is to increase the shelf life of alkaline primary cells. Yet another object of the present invention to reduce the cost of manufacturing alkaline primary batteries having superior performance characteristics.

The foregoing, and additional, objects are solved by the invention as defined in the appendent claims which will become more fully apparent with the following description.

The polymeric resin coating, which upon drying becomes a thin discontinuous conductive plastic film, when applied to the current collector in alkaline dry cells, prevents the formation of a high resistance layer between the cathode and the current collector, even during storage at elevated temperatures.

The improved performance characteristics of alkaline primary cells incorporating this invention vis-a-vis cells of the prior art becomes more apparent when cells are stored for long periods of time; the present invention prevents any significant drop-off in performance noted in alkaline cells stored for long periods of time at high temperatures. The present invention, since it eliminates the need for nickel-plated steel and does not require a continuous, uniform application of the conductive coating, reduces the costs of manufacturing alkaline primary cells.

In accordance with the present invention, the interior surfaces of the electrochemical cell container which functions as a current collector of an alkaline dry cell is coated with an organic conductive resin coating and the container is formed of unplated steel. This coating, which may be applied by various techniques, including painting, spraying or dipping, contains an alkaline resistant organic binder dissolved in a compatible solvent. Spraying is the preferred method of applying the conductive primer.

After being applied to the positive current collector, the primer is dried at elevated temperatures, which permits the evaporation of the solvent and allows for the adhesion to the positive current collector of a thin, electrically conductive resin coating. The resulting conductive coating is typically 15μm to 20μm thick, but may range from 2,5 to 50μm in thickness. The conductive coating is discontinuous and need not be uniform in thickness upon the surface of the positive current collector; it has a carbon content of between 25 and 40 weight percent. Improvements in the performance of alkaline primary cells incorporating the present invention versus such cells incorporating unplated steel positive current collectors have been found when only 25% of the surface of the positive current collector was covered by the conductive coating. Surprisingly, however, alkaline dry cell batteries in which the entire surface of the positive current collector was covered with the plastic, conductive film performed no better than alkaline dry cells batteries in which the conductive primer coated only 50% of the surface of the positive current collector. Therefore, while the conductive coating should be resistant to the alkaline electrolyte, it need not be impervious to it, since the present invention includes the use of a discontinuous conductive film on the positive current collector.

In the present invention, the binder must be a film forming polymer which is compatible with alkaline battery components. Film forming binders which hydrolyze or oxidize in the presence of the electrolyte or which react with the cathode materials of such cells cannot be used in practicing the present invention. The present invention can be successfully practiced with a wide range of polymeric binders including ABS (acrylonitrile butadiene styrene), PVC (polyvinyl chloride), epoxies, fluorcarbons, nylons, polypropylene, polybutylene, polystyrenes and neoprenes. The present invention may also be practiced with binders which are rubbers and/or elastomers, such as isobutylene, isoprene, chloroprene, polysulfide, ethylene propylene, chlorinated and chlorosulfonated polyethylene, fluorosilicone and propylene oxide. However, materials which are soluble in KOH, the usual electrolyte in alkaline dry cells, such as CMC (which is disclosed in the Japanese Patent 42-25145), should not be used in practicing the present invention.

The solvent portion of the resin must wet the surface of the positive current collector. The solvent must also be fully compatible with the binder. The present invention can be successfully practiced with solvents such as ethyl acetate, butanol, methyl ethyl ketone, methyl isobutyl ketone, and paraffinic hydrocarbon liquids.

To obtain the necessary conductivity, a conductive binder (polymer) may be used, or alternatively, a conductive material such as carbon or metal powder may be compounded in the primer such that the conductive material is dispersed throughout the resin coating upon evaporation. One method of obtaining the desired conductivity is to mill into the binder a carbonaceous material, usually carbon black, acetylene black or graphite, at a temperature at which the binder will flow, thereby dispersing carbon throughout the binder. The carbon loaded binder can then diluted with the appropriate solvent and applied to the current collector as disclosed herein.

In practicing the present invention, it has been found that the resulting conductive film must be at least as conductive as well known anti-stats. It has also been found that the resultant film should have sufficient mechanical integrity and abrasion resistance to remain adhered to the positive current collector during the force fitting of the cathode mix into the current collector, a procedure widely used commercially.

When carbon is added to the binder to form the conductive primer, the weight percent of the carbon in the conductive film adhering to the positive current collector after evaporation of the solvent, should range between 25% and 40%. While increasing the amount of carbon in the conductive film will reduce resistance, the reduction in the binder to carbon ratio decreases the mechanical integrity of the conductive film and increases the probability that the conductive film will not adhere sufficiently to the surface of the positive current collector. Similarly, as the carbon weight percent is decreased below 25%, the conductivity of the film decreases, and the advantages taught by the present invention become negligible.

Brief Description of the Drawings

Figure 1 is a drawing of an alkaline cylindrical battery incorporating this invention.

Figure 2 is a graph of battery voltage versus discharge time for batteries incorporating this invention, batteries of the commercial prior art, and batteries neither of the prior art nor incorporating this invention.

Figure 3 is a graph of battery voltage versus discharge time for several alternative embodiments of this invention.

Figure 4 is a graph of fresh battery voltage versus discharge time for batteries incorporating this invention, batteries of the commercial prior art, and batteries neither of the prior art nor incorporating this invention.

Figure 5 is a graph of battery voltage versus discharge time after storage for twelve months, for batteries incorporating this invention, batteries of the commercial prior art, and batteries neither of the prior art nor incorporating this invention.

Figure 6 is a graph of battery voltage versus discharge time after storage for twelve months for batteries incorporating the present invention, wherein the conductive film only partially covers the positive current collector, batteries of the commercial prior art, and batteries neither of the prior art nor incorporating this invention.

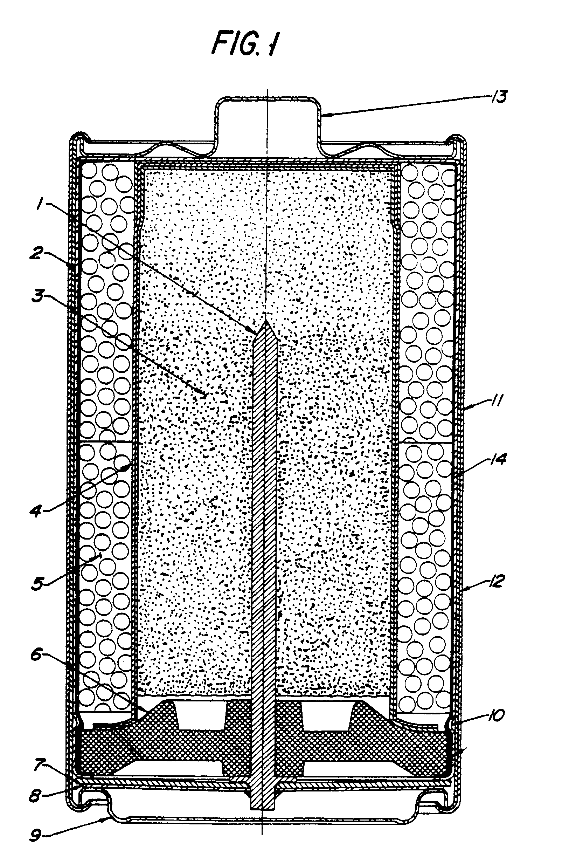

Figure 1 is a cross-sectional diagram of an alkaline cylindrical battery using this invention. The positive current collector, a drawn steel container 2, open on one end and about 0.010 inches (0.0254 cm) thick, has a coating 14 applied to its interior surfaces. Two cathode annular rings 5, formed such that their outside diameters are greater than the inside diameter of the positive current collector, are forced into the positive current collector, forming a pressure contact with the coating. A bead 10 is rolled into the container near the open end to support the sealing disk. A separator 4 and an anode 3 are placed inside of the cathode rings. A sealing disk 6 containing a negative current collector 1 is placed into the open end of the container and in contact with the bead. The open end of the container is crimped over the sealing disk thus compressing it between the crimp and the bead to seal the cell. An insulation washer 7 with a central aperture is placed over the crimped end of the cell such that the end of the negative current collector 1 protrudes through the aperture. A contact spring 8 is affixed to the end of the negative current collector 1. Terminal caps 9 and 13 are placed into contact with the contact spring 8 and the positive current collector 2, respectively, and an insulating tube 12 and steel shell 11 are placed around the cell and crimped on their ends to hold the terminal caps in place.

Several examples of the utility of the present invention will now be explained.

Example 1

Five grams of XC-72 carbon black (a trademark of Cabot Corporation) and 500 grams of Adcoat 52GLB (a trademark of Morton Chemical Co.), which is approximately 2% solids, were added to a jar which was one-half full of one-eighth inch (0.31 cm) steel shot. The jar was capped and placed on a ball mill for 45 minutes. The contents of the jar were then sprayed onto the interior surface of unplated steel, D-size alkaline manganese positive current collectors and dried at $180°$ F ($82°$ C) for five minutes, which yielded a carbon concentration in the dried film of approximately 33.3%.

The cathode mix (manganese dioxide, graphite, potassium hydroxide, water, acetylene black and cement) was formed into cylinders and placed in the coated positive current collector. A separator material was placed against the inner surface of the cathode cylinders. The separator was then filled with gelled potassium hydroxide and amalgamated zinc. After a plastic seal and a negative current collector were inserted into the positive can, the battery was sealed.

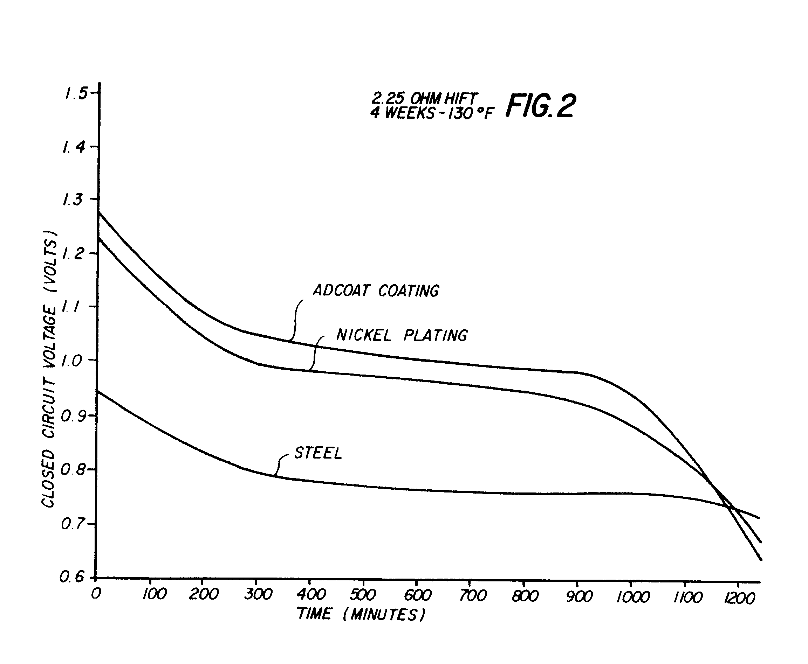

These batteries were discharged on the ASTM heavy industrial flashlight test (2.25 HIFT), which is 2.25 ohms four minutes out of fifteen minutes, eight hours/day, seven days/week. Figure 2 is a graph of the 2.25 HIFT discharge voltage after storage at $130°$ F ($54°$ C) for four weeks. The batteries constructed with the conductive film covering the positive current collectors had a higher closed circuit voltage than batteries using nickel plated steel or unplated steel positive current collectors.

Example 2

Many commercially available conductive coatings are available which are applicable to this invention. Several examples of these conductive coatings are listed in Table 1, which describes the composition and the transverse resistance for these commercial coatings.

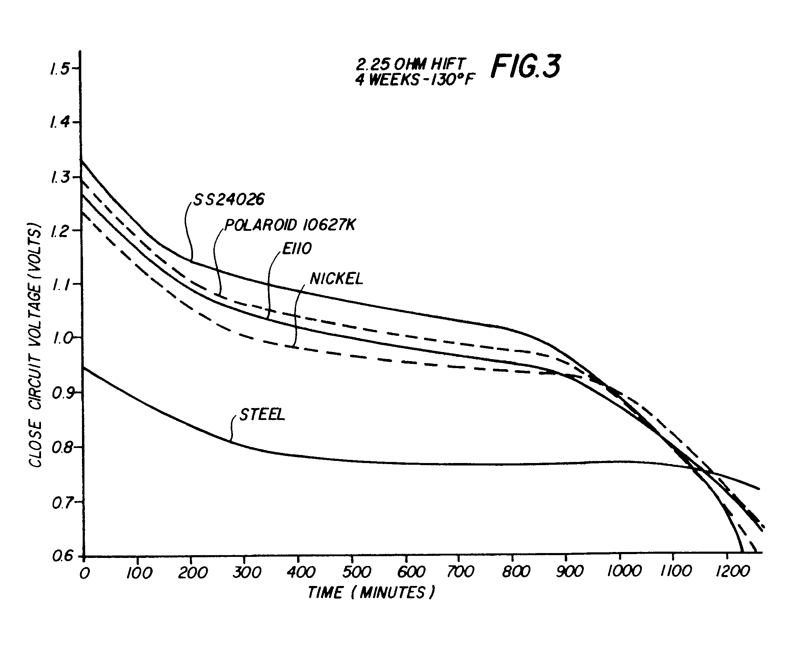

Batteries constructed with positive current collectors coated with some of the above listed coatings perform similarly to batteries constructed with the coating in Example 1. Figure 3, a graph of closed circuit voltage versus discharge time, after storage for 4 weeks at $130°$ F, ($54°$ C) on the 2.25 HIFT test, compares the performance of batteries constructed with positive current collectors coated with commercially available conductive coatings with batteries constructed as in Example 1.

## TABLE 1

### COMMERCIAL CONDUCTIVE POLYMER COMPOSITIONS

(The "Names" are beleived to be trademarks of the manufacturers.)

| Name of Conductive Polymer | Conductive Agent | Polymer Type | Manufacturer | Transverse Resistance on "D" Size Steel Cans (Ohms/1.275 in$^2$) |
|---|---|---|---|---|
| 10627-K | Carbon Black | PVC | Polaroid | .037 |
| SS24055 | Graphite | epoxy | Acheson Colloids | .271 |
| SS24056 | Graphite | epoxy | Acheson Colloids | .094 |
| SS24026 | Graphite | vinyl | Acheson Colloids | .177 |
| SS24018 | Graphite | vinyl | Acheson Colloids | .116 |
| Electrodag 110 | Graphite | PVC | Acheson Colloids | — |
| Electrodag 199 | Carbon Black | Neoprene | Acheson Colloids | — |
| Electrodag 502 | Graphite/Carbon Black | Fluoro-elastomer | Acheson Colloids | .022 |
| LS1181 | Graphite | — | Graphite Products | .454 |
| P70 | Carbon Black | PVC | Pervel Industries | .014 |
| 155-293 | — | epoxy | G. Bartels | .006 |

Example 3

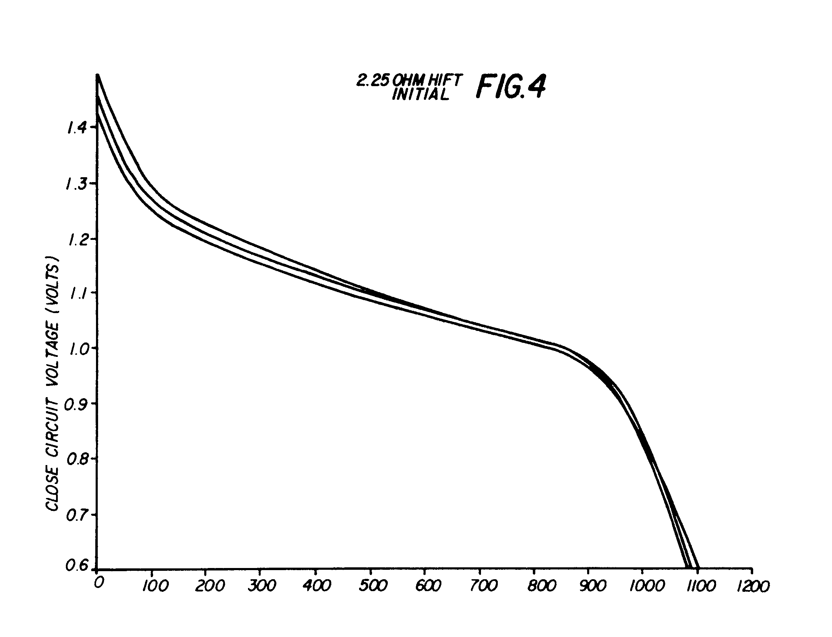

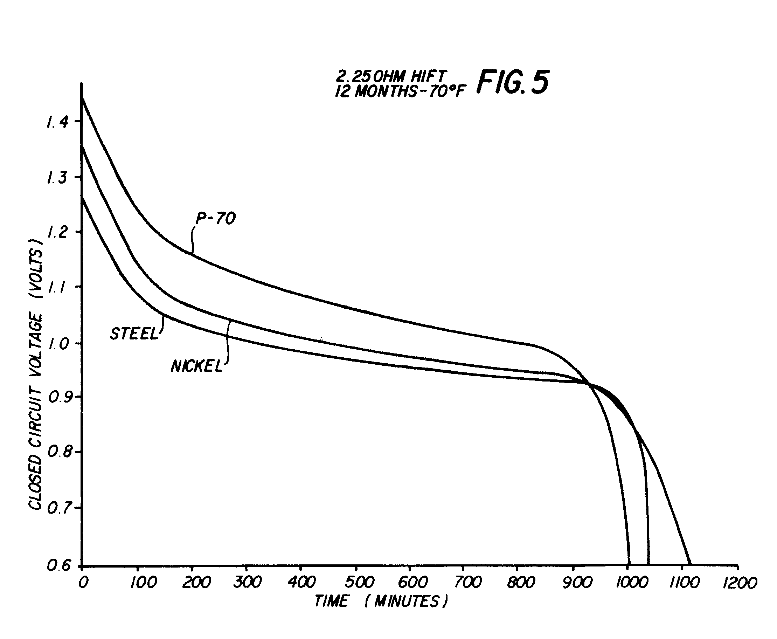

To demonstrate the advantage of the present invention in batteries which are stored for extended periods of time, steel cans were spray coated with P-70 primer and assembled into batteries as in Example 1. When these batteries were placed on the 2.25 HIFT, initially only a small improvement was seen in the closed circuit voltage during discharge (Figure 4). However, when these batteries were aged at room temperature for one year, the same increase in the discharge closed circuit voltage was seen as for batteries aged for 4 weeks at 130° F (55° C) (Figure 5), demonstrating that when batteries are constructed in accordance with the present invention, the shelf life of such alkaline batteries will be markedly increased.

Example 4

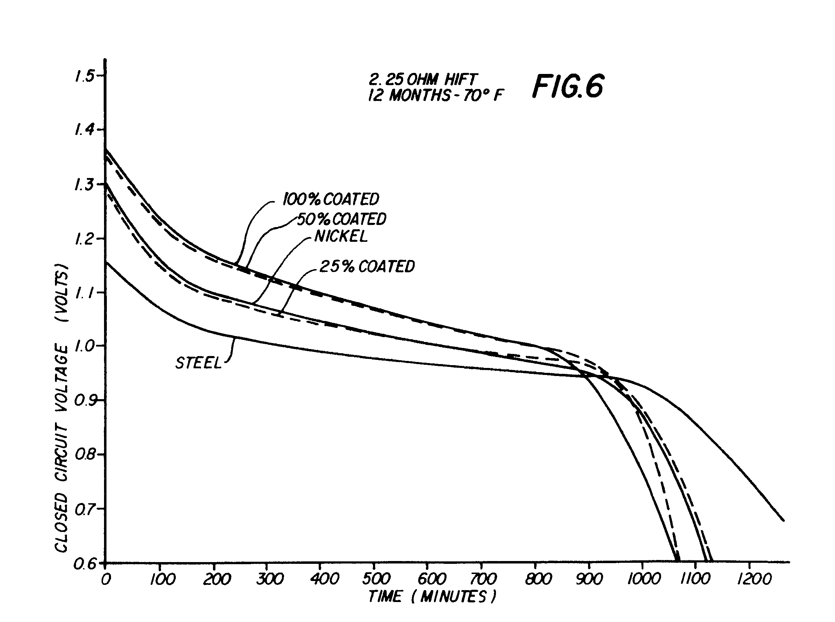

To determine whether a continuous conductive coating of the positive current collector was required, the interior surfaces of unplated steel positive current collectors were coated with varying amounts of P-70 primer. These positive current collectors were then assembled into batteries as in Example 1. The batteries were stored for one year at 70° F (21° C) and then discharged on the 2.25 HIFT test. The results, shown in Figure 6, evidence that it is not necessary to form a continuous, electrolyte resistant, conductive coating of the positive current collector in order to practice the present invention. Batteries made from unplated steel positive current collectors wherein the conductive film coated only 50% of the current collector performed essentially the same as those batteries wherein the positive current collector was 100% covered. Batteries wherein the conductive film covered only 25% of the positive current collector performed as well as batteries constructed with uncoated, nickel-plated steel positive current collectors.

From the results in the foregoing examples and the referenced drawings, it is evident that the alkaline primary cells of this invention are superior to conventional alkaline primary batteries. While the foregoing examples used the alkaline $Mn_2O/Zn$ electrochemical system in a commercial cylindrical configuration, the present invention includes other alkaline electrochemical systems which use an electrolyte which is not corrosive to the positive current collector.

EP 0 175 149 B1

## Claims

1. An alkaline electrochemical cell having a metal container (2) which functions as a positive current collector, a cathode (5) in contact with the container (2), an anode (3) electrically connected to a negative current collector (1) and separated from said cathode (5), and an alkaline electrolyte, characterized in that the metal container (2) is formed of unplated steel and has a thin, dry, conductive alkali-resistant plastic coating film (14) on its interior surface which contains carbon and which is formed by applying a discontinuous film to the interior surface of the metal container, the weight percentage of carbon in the discontinuous conductive film adhering to the positive current collector ranges between 25 and 40 weight percent.

2. Alkaline electrochemical cell according to claim 1, characterized in that the plastic coating (14) is from the group consisting of ABS (acrylonitrile butadiene styrene), PVC (polyvinyl chloride), epoxies, fluorocarbons, nylons, polypropylene, polybutylene, polystyrenes, neoprenes, isobutylene, isoprene, chloroprene, polysulfide, ethylene propylene, chlorinated and chlorosulfonated polyethylene, fluorosilicone and propylene oxide.

3. Alkaline electrochemical cell according to any of claims 1 to 2, characterized in that the plastic coating (14) is 2,5 to 50 $\mu$m, preferably 15 to 20 $\mu$m thick.

4. Alkaline electrochemical cell according to any of claims 1 to 3, characterized in that the plastic coating (14) preferably covers 25 % of the area of the positive current collector.

5. Alkaline electrochemical cell according to any of claims 1 to 4, characterized in that the cathode (5) is under pressure contact with the positive current collector (2) through the organic coating (14).

6. Alkaline electrochemical cell according to any of claims 1 to 5, characterized in that the cathode consists of preformed cathode rings (5), which are preferably under a friction fit with the positive current collector (2).

7. Alkaline electrochemical cell according to any of claims 1 to 6, characterized in that the cell is a manganese dioxide/zinc cell.

## Revendications

1. Pile électrochimique alcaline comprenant un récipient (2) en métal fonctionnant de collecteur de courant positif, une cathode (5) en contact avec le récipient (2), une anode (3) en connexion électrique avec le collecteur de courant négatif (1) et séparée de ladite cathode (5), et un électrolyte alcalin, caractérisée en ce que le récipient (2) en métal est fait en acier non plaqué et comporte sur sa surface intérieure une pellicule de revêtement (14) mince, sèche, conductrice, résistant aux alcalis, en matière plastique, pellicule qui contient du carbone et a été produite en appliquant un film discontinu à la surface intérieure du récipient en métal, la proportion, en pour-cent en poids, du carbone dans la pellicule conductrice discontinue qui adhère au collecteur de courant positif, étant comprise entre 25 et 40 pour-cent en poids.

2. Pile électrochimique alcaline selon la revendication 1, caractérisée en ce que le revêtement (14) en matière plastique est choisie dans le groupe comprenant ABS (styrène-acrylonitril-butadiène), CPV (chlorure de polyvinyle), résines époxy, fluorocarbones, nylons, polypropylène, polybutylène, polystyrènes, néoprènes, isobutylène, isoprène, chloroprène, polysulfure, ethylènepropylène, polyéthylène chloré et chlorosulfoné, fluorosilicone et l'oxyde de propylène.

3. Pile électrochimique alcaline selon l'une quelconque des revendications 1 et 2, caractérisée en ce que le revêtement (14) en matière plastique a une épaisseur comprise entre 2,5 et 50 $\mu$m, de préférence entre 15 et 20 $\mu$m.

4. Pile électrochimique alcaline selon l'une quelconque des revendications 1 à 3, caractérisée en ce que le revêtement (14) en matière plastique recouvre, de préférence, 25% de la surface du collecteur de courant positif.

5. Pile électrochimique alcaline selon l'une quelconque des revendications 1 à 4, caractérisée en ce que la cathode (5) prend appui sous pression contre le collecteur de courant positif (2), par l'intermédiaire du revêtement organique (14).

6. Pile électrochimique alcaline selon l'une quelconque des revendications 1 à 5, caractérisée en ce que la cathode consiste en des bagues cathodiques (5) préformées qui forment, de préférence, un ajustement à friction avec le collecteur de courant positif (2).

7. Pile électrochimique alcaline selon l'une quelconque des revendications 1 à 6, caractérisée en ce que la pile est une pile au dioxyde de manganèse/zinc.


## Ansprüche

1. Alkalische elektrochemische Zelle mit einem als positiver Stromsammler dienenden Behälter (2) aus Metall, einer am Behälter (2) anliegenden Kathode (5), einer mit einem negativen Stromsammler (1) elektrisch verbundenen und von der Kathode (5) getrennten Anode (3) und einem alkalischen Elektrolyten,
dadurch gekennzeichnet, daß
der Behälter (2) aus Metall aus unplattiertem Stahl hergestellt ist und auf seiner Innenfläche einen dünnen, trockenen, elektrisch leitfähigen, alkalifesten Beschichtungsfilm (14) aus Kunststoff aufweist, der Kohlenstoff enthält und durch Auftragen eines diskontinuierlichen Films auf die Innenfläche des Behälters aus Metall erzeugt wurde, wobei der Gewichtsprozent-Anteil des Kohlenstoffs im am positiven Stromsammler anhaftenden diskontinuierlichen, elektrisch leitfähigen Film zwischen 25 und 40 Gew.-% beträgt

2. Alkalische elektrochemische Zelle nach Anspruch 1,
dadurch gekennzeichnet, daß
die Beschichtung (14) aus Kunststoff aus der Gruppe mit ABS (Acrylnitril-butadien-styrol), PVC (Polyvinylchlorid), Epoxyharzen, Fluorkohlenstoffen, Nylonarten, Polypropylen, Polybutylen, Polystyrolen, Neoprenen, Isobutylen, Isopren, Chlorpren, Polysulfid, Ethylenpropylen, chloriertem und chlorsulfoniertem Polyethylen, Fluorsilikon und Propylenoxid gewählt ist.

3. Alkalische elektrochemische Zelle nach einem der Ansprüche 1 und 2,
dadurch gekennzeichnet, daß
die Beschichtung (14) aus Kunststoff zwischen 2,5 und 50 $\mu$m, vorzugsweise zwischen 15 und 20 $\mu$m dick ist.

4. Alkalische elektrochemische Zelle nach einem der Ansprüche 1 bis 3,
dadurch gekennzeichnet, daß
die Beschichtung (14) aus Kunststoff vorzugsweise 25% der Fläche des positiven Stromsammlers bedeckt.

5. Alkalische elektrochemische Zelle nach einem der Ansprüche 1 bis 4,
dadurch gekennzeichnet, daß
die Kathode (5) über die organische Beschichtung (14) unter Druck am positiven Stromsammler (2) anliegt.

6. Alkalische elektrochemische Zelle nach einem der Ansprüche 1 bis 5,
dadurch gekennzeichnet, daß
die Kathode aus vorgeformten Kathodenringen (5) besteht, die im positiven Stromsammler (2) vorzugsweise unter Reibungssitz passen.

7. Alkalische elektrochemische Zelle nach einem der Ansprüche 1 bis 6
dadurch gekennzeichnet, daß
die Zelle eine Mangandioxid/Zink-Zelle ist.

# FIG. 1

2.25 OHM HIFT
4 WEEKS-130°F FIG.2

CLOSED CIRCUIT VOLTAGE (VOLTS)

ADCOAT COATING

NICKEL PLATING

STEEL

TIME (MINUTES)

EP 0 175 149 B1

2.25 OHM HIFT
4 WEEKS - 130°F   *FIG.3*

SS24026
POLAROID 10627K
E110
NICKEL
STEEL

CLOSE CIRCUIT VOLTAGE (VOLTS)

TIME (MINUTES)

EP 0 175 149 B1

2.25 OHM HIFT
INITIAL   *FIG.4*

CLOSE CIRCUIT VOLTAGE (VOLTS)

EP 0 175 149 B1

2.25 OHM HIFT
12 MONTHS-70°F FIG.5

P-70

STEEL

NICKEL

CLOSED CIRCUIT VOLTAGE (VOLTS)

1.4
1.3
1.2
1.1
1.0
0.9
0.8
0.7
0.6

0  100  200  300  400  500  600  700  800  900  1000  1100  1200

TIME (MINUTES)

EP 0 175 149 B1

2.25 OHM HIFT
12 MONTHS - 70° F     FIG.6

100% COATED
50% COATED
NICKEL
25% COATED
STEEL

CLOSED CIRCUIT VOLTAGE (VOLTS)

TIME (MINUTES)

EP 0 175 149 B1